# EUROPEAN PATENT APPLICATION

(11) **EP 2 375 732 A1**
(43) Date of publication of application: **12.10.2011**
(21) Application number: 10194505.3
(22) Date of filing: 10.12.2010
(51) Int. Cl.: H04N 5/445, H04N 7/16

(54) **Broadcast receiving apparatus and broadcast receiving method**

(30) Priority: 31.03.2010 JP 2010084352
(71) Applicant: Kabushiki Kaisha Toshiba, Tokyo (JP)
(72) Inventor: Miyoshi, Eisuke, Tokyo (JP)
(74) Representative: HOFFMANN EITLE

(57) **Abstract**

According to one embodiment, a broadcast receiving apparatus includes a setting module, a receiving module, a storage, and a managing module. The setting module is configured to set a priority on at least one of a plurality of channels. The receiving module is configured to receive program-related information related to programs broadcasted on the plurality of channels. The storage has a maximum storage amount. The managing module is configured to manage storing the program-related information associated with the priority within the maximum storage amount by storing the program-related information related to a channel of relatively higher priority.

## Description

### Field

Embodiments described herein relate generally to a broadcast receiving apparatus and a broadcast receiving method for receiving information related to broadcast programs of a plurality of channels.

### Background

In recent years, with the spread of digital broadcasting, the number of channels has remarkably been increasing.

It can easily be assumed that a considerable number of channels are present if not only terrestrial broadcasting but also satellite broadcasting, cable broadcasting such as CATV and further, communication broadcasting provided through the Internet are included.

Accordingly, it is expected to efficiently manage the information received by multichannel broadcasting.

### BRIEF DESCRIPTION OF THE SEVERAL VIEWS OF THE DRAWINGS

A general configuration that implements the various features of the invention will be described with reference to the drawings. The drawings and the associated descriptions are provided to illustrate embodiments of the invention and not to limit the scope of the invention.
FIG. 1 is an exemplary block diagram showing a configuration of a television receiver as a broadcast receiving apparatus according to an embodiment;
FIG. 2 is an exemplary structural view of a system including blocks provided in a signal processor and executing a processing of storing multiple pieces of program-related information based on the priority of each channel;
FIG. 3 is an exemplary conceptual view showing a concrete example of a channel list in which a priority is set on each channel; and
FIG. 4 is an exemplary flowchart for explaining an operation of the processing of storing multiple pieces of program-related information based on the priority of each channel.

### DETAILED DESCRIPTION

In general, according to one embodiment, a broadcast receiving apparatus includes a setting module, a receiving module, a storage, and a managing module. The setting module is configured to set a priority on at least one of a plurality of channels. The receiving module is configured to receive program-related information related to programs broadcasted on the plurality of channels. The storage has a maximum storage amount. The managing module is configured to manage storing the program-related information associated with the priority within the maximum storage amount by storing the program-related information related to a channel of relatively higher priority.

Hereinafter, an exemplary embodiment will be described while referring to the drawings.

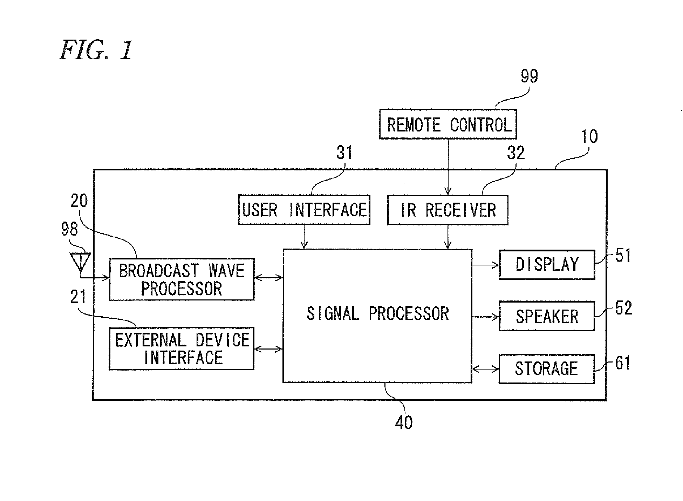

FIG. 1 is an exemplary block diagram showing a configuration of a television receiver 10 shown as an example of a broadcast receiving apparatus according to the embodiment.

The television receiver 10 according to the present embodiment includes a broadcast wave processor 20, an external device interface 21, a user interface 31, an IR receiver 32, a signal processor 40, a display 51, a speaker 52 and a storage 61. An antenna 98 is connected to the broadcast wave processor 20. The IR receiver 32 exchanges information with a remote control (hereinafter, referred to as RC) 99. The RC 99 is a remote control device using infrared rays or radio signal to transmit signals for controlling the television receiver 10.

The television receiver 10 according to the present embodiment sets a priority on each of multiple channels. Moreover, the television receiver 10 receives program-related information including the title and broadcast time of each of multiple programs broadcasted on the multiple channels. Then, the television receiver 10 executes the processing of storing the received plurality of pieces of program-related information based on the priority of each channel.

The broadcast wave processor 20 has a tuner and a demodulator for terrestrial or satellite digital broadcast waves or analog broadcast waves received by the antenna 98. The broadcast wave processor 20 receives a reception signal received by the antenna 98, and executes specific channel selecting processing, demodulating processing and the like on the reception signal. Then, the broadcast wave processor 20 outputs, to the signal processor 40, a transport stream signal (hereinafter, referred to as TS signal) containing program-related information such as the video and audio information and title of the program received by executing these processings. The broadcast wave processor 20 may be provided more than one in number.

The external device interface 21 has an information extracting module that extracts necessary information based on various standards such as the HDMI (trademark) standard, the USB standard and the IEEE1394 standard. The external device interface 21 outputs, to the signal processor 40, the TS signal extracted from the information received from external devices connected to connection terminals conforming to these standards and storage media such as an external HDD and a memory card. The information from the connected external devices and storage media includes content-related information such as the video and audio information and titles of the contents. Analog video and audio signals are sometimes inputted to the external device interface 21 from a connected external device. The external device interface 21 A/D-converts the inputted analog video and audio signals, and outputs the converted digital video and audio signals to the signal processor 40.

The user interface 31 has an operation key, and outputs the operation information responsive to the operation key to the signal processor 40. Likewise, the IR receiver 32 receives the signal transmitted from the RC 99, and outputs the operation information responsive to the received signal to the signal processor 40. The user interface 31 and/or the RC 99 has multiple operation keys including an operation key (not shown) to output a screen for setting a priority on each channel received by the television receiver 10.

The signal processor 40 executes multiple processings by using modules provided in the signal processor 40 and modules connected to the signal processor 40. For example, the signal processor 40 selects the input of the TS signal from any of the input sources such as the broadcast wave processor 20 and the external device interface 21 according to the operation information from the user interface 31 or the RC 99 through the IR receiver 32. Moreover, the signal processor 40 executes a certain processing on the TS signal inputted from the selected input source, and outputs the video information to the display 51 and the audio information to the speaker 52.

In the present embodiment, the signal processor 40 sets a priority on each of multiple channels. Moreover, the signal processor 40 receives the program-related information on each of multiple programs broadcasted on multiple channels selected through the broadcast wave processor 20. The signal processor 40 stores the received program-related information on programs broadcasted on multiple channels into the storage 61 based on the priority of each channel.

The display 51 is a display module including a display panel that displays the video signals inputted from the signal processor 40. As the display 51, a thin flat panel display such as an LCD (liquid crystal display) or a PDP (plasma display panel) is applicable. In the present embodiment, the display 51 displays a screen to allow the user to set priorities on channels or the OSD (on-screen display) of an EPG (electronic program guide) screen.

The speaker 52 outputs the audio signal inputted from the signal processor 40. As the speaker 52, two speakers for right and left channels and further, a subwoofer for outputting low tones of the inputted audio signal may be provided.

The storage 61 is a nonvolatile memory capable of storing information even when no power is supplied. The storage 61 stores information outputted from the signal processor 40, and the stored information is read from the signal processor 40. In the present embodiment, the storage 61 stores the program-related information on each of multiple programs broadcasted on respective channels selected through the broadcast wave processor 20. Moreover, the storage 61 stores the information representative of the priorities set on the channels. The storage 61 may be a drive device such as an HDD or an SSD. When the storage 61 is a drive device, it may be connected to the outside of the television receiver 10.

The television receiver 10 may be provided with not only the above-described plurality of blocks but also a network communication function realizing block (not shown) having a communication processor that performs communication through a network such as a LAN or a WAN. This block receives information including the video and audio information and content-related information on contents from an information provision source such as a specific server or a recording medium on the connected network, and outputs a TS signal based on this information to the signal processor 40. Moreover, the signal processor 40 may select, as an input source, the TS signal inputted from this block.

The present embodiment is an embodiment in which the television receiver 10 is an example of the broadcast receiving apparatus. However, the present embodiment may be applied to an apparatus such as a personal computer, a portable mobile terminal, an HDD/optical disk recorder or a set-top box. That is, embodiments are not limited in items such as the broadcast wave type and the signal receiving path but are merely necessarily broadcast receiving apparatuses having a component that receives program-related information and a component that performs control so that the received program-related information is stored.

With this configuration, the multiple blocks provided in the television receiver 10 according to the embodiment receive the program-related information on each of multiple programs broadcasted on respective channels, and store the received program-related information based on the priority set on each channel. That is, the television receiver 10 executes the processing of storing the received plurality of pieces of program-related information based on the priority of each channel. Thus, the television receiver 10 can adaptively control the storage of information related to programs broadcasted on multiple channels. These processings are realized by mainly the signal processor 40 executing multiple processings.

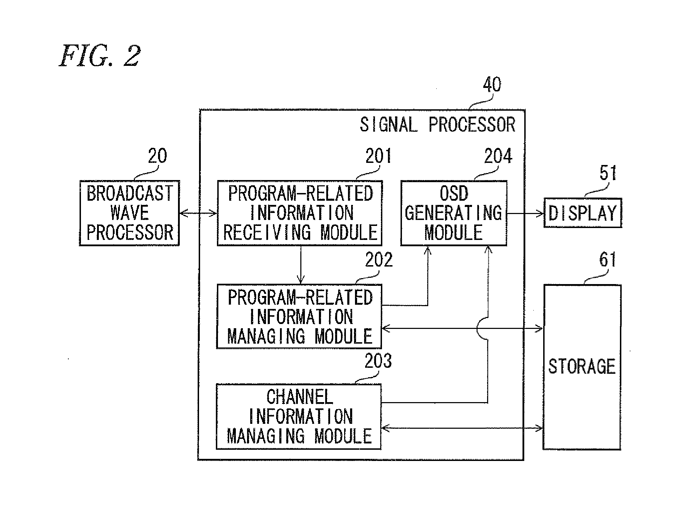

Next, the configuration of the blocks provided in the signal processor 40 described with reference to FIG. 1 and executing the processing of storing multiple pieces of program-related information based on the priority of each channel will be described by using FIG. 2.

FIG. 2 is an exemplary structural view of a system including the blocks provided in the signal processor 40 and executing the processing of storing multiple pieces of program-related information based on the priority of each channel.

The signal processor 40 is provided with a program-related information receiving module 201, a program-related information managing module 202, a channel information managing module 203, an OSD generating module 204.

The program-related information receiving module 201 extracts and receives the program-related information contained in the TS signal inputted from the broadcast wave processor 20. Examples of the broadcasting forms of the program-related information include a form in which the program-related information related to multiple channels is broadcasted on a specific channel and a form in which the program-related information related to each channel is broadcasted on the corresponding channel. The program-related information receiving module 201 outputs the received program-related information to the program-related information managing module 202. It is to be noted that the program-related information receiving module 201 may extract the program-related information not from the broadcast wave processor 20 but based on a TS signal from the external device interface 21, the network communication function realizing block (not shown) or the like.

The program-related information managing module 202 determines whether to store the program-related information inputted from the program-related information receiving module 201 or not based on a certain condition. According to the result of the determination, the program-related information managing module 202 stores the program-related information to be stored, into the storage 61, and manages it. Moreover, the program-related information managing module 202 outputs the program-related information read from the storage 61, to the OSD generating module 204, and causes the OSD generating module 204 to generate the OSD of the EPG screen.

The channel information managing module 203 stores the channel information related to the channels that can be selected by the broadcast wave processor 20, into the storage 61, and manages it. For example, the channel information is information representative of the channel number, the name of the broadcasting station, the logo of the broadcasting station and the like. The channel information managing module 203 manages the priority of each channel associated with the channel information. The channel information managing module 203 outputs the channel information to the OSD generating module 204, and causes the OSD generating module 204 to generate the OSD of a setting screen for allowing the user of the television receiver 10 to set the priority of each channel.

The OSD generating module 204 generates the OSD based on the information inputted from the program-related information managing module 202 and the channel information managing module 203. The OSD generating module 204 generates the OSD of the EPG screen based on the program-related information inputted from the program-related information managing module 202. Moreover, the OSD generating module 204 generates the OSD of the setting screen for setting the priority of each channel based on the channel information inputted from the channel information managing module 203.

That is, with this system configuration including multiple blocks, the signal processor 40 manages the priority of each channel set by the user of the television receiver 10 while associating it with the channel information. Moreover, the signal processor 40 receives the program-related information on each of multiple programs broadcasted on respective channels, and manages the received program-related information based on the priority of each channel. Thus, the television receiver 10 according to the present embodiment can adaptively control the storage of information related to programs broadcasted on multiple channels.

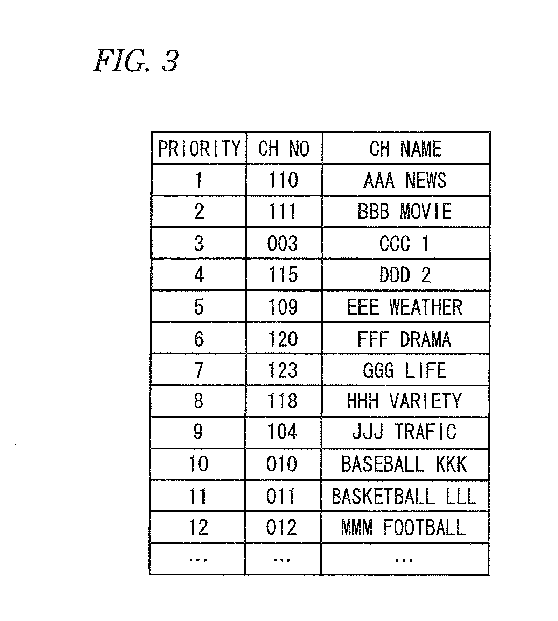

Next, a concrete example of a channel list where a priority is set on each channel will be described by using FIG. 3.

FIG. 3 is an exemplary conceptual view showing the concrete example of the channel list in which a priority is set on each channel.

As in the conceptual view showing FIG. 3, in this channel list, priorities are associated with the channel numbers and channel names of specific channels. The user of the television receiver 10 can arbitrarily set these priorities by using the OSD of the setting screen generated by the OSD generating module 204.

The setting screen is not limited to the application of a specific mode, but various modes may be applied. For example, a mode is applicable in which numerical values representative of priorities are previously displayed, candidates of the channel number or the channel name associated with each numerical value are presented in a pull-down form and the user arbitrarily makes a selection from among the candidates presented in the pull-down form. Moreover, a mode may be applied in which a channel number or a channel name is previously displayed and the user sets the priority associated with the displayed channel number or channel name. Further, a mode may be applied in which by specifying a specific area, priorities are automatically set so that channels whose reception is recommended in the specified area have higher priorities. In addition, a mode may be applied in which the priority of each channel is preset in the television receiver 10.

While the channel list shown in FIG. 3 conceptually shows the information that the channel information managing module 203 manages by using the storage 61, it is desirable that the channel list be visualized as a setting screen generated by the OSD generating module 204, or the like. When this channel list is visualized, since the number of channels that can be displayed within one screen is limited, if there are a large number of receivable channels, it is difficult to display all the channels within one screen. In such a case, the channel list may be made so that the displayable number of channels are displayed within one screen and the channels that cannot be displayed are displayed by scrolling.

Moreover, instead of setting one different priority on each of multiple channels, the same priority may be set on multiple channels. According to this case, the processing at the same level can be executed on the channels of the same level of priority.

In the processing of storing multiple pieces of program-related information based on the priority of each channel, the program-related information is stored based on the priority of each channel set in this channel list.

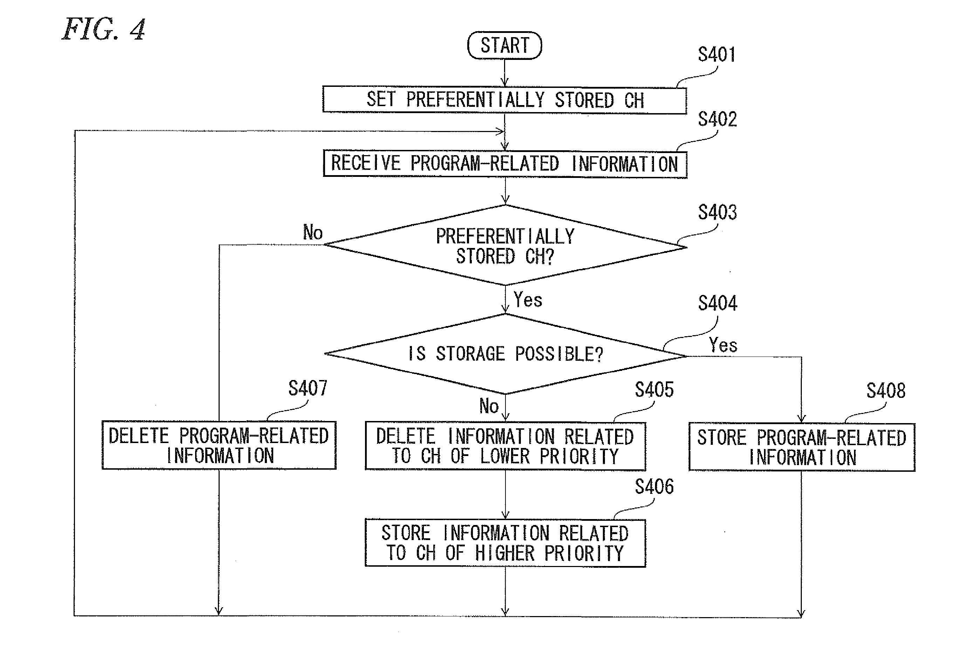

Next, the operation of the processing of storing multiple pieces of program-related information based on the priority of each channel which processing is executed by the blocks provided in the signal processor 40 described with reference to FIG. 2 will be described by using FIG. 4.

FIG. 4 is an exemplary flowchart for explaining the operation of the processing of storing multiple pieces of program-related information based on the priority of each channel.

First, like the channel list shown in FIG. 3, the priority of each channel is set by using the OSD of the setting screen generated by the OSD generating module 204, and a preferentially stored channel whose program-related information is preferentially stored is set (S401). Then, the program-related information receiving module 201 receives the program-related information based on the TS signal inputted from the broadcast wave processor 20 (S402), and outputs the received program-related information to the program-related information managing module 202. The program-related information managing module 202 determines whether the channel related to the inputted program-related information is a preferentially stored channel or not (S403).

When this channel is a preferentially stored channel (Yes of S403), it is determined whether the program-related information can be stored in the storage 61 or not (S404). Whether the program-related information can be stored or not means whether or not the program-related information is stored within the maximum storage amount which is the maximum amount of program-related information that can be stored in the storage 61. This maximum storage amount may be arbitrarily determined every time the processing of this step is executed.

When it is determined that the program-related information cannot be stored (No of S404), the program-related information managing module 202 compares the priority of the channel related to the program-related information to be stored with the lowest one of the priorities associated with the already stored program-related information, and deletes the program-related information of the lower priority (S405). Then, the program-related information managing module 202 stores the program-related information of the higher priority (S406). That is, when the priority of the channel related to the program-related information to be stored is higher, this program-related information is newly stored, and when the lowest one of the priorities associated with the already stored program-related information is higher, this program-related information is continuously stored. Then, the program-related information receiving module 201 again receives program-related information based on the inputted TS signal (S402).

On the other hand, when the channel related to the program-related information inputted from the program-related information receiving module 201 is not a preferentially stored channel (No of S403), this program-related information is deleted (S407). Then, the program-related information receiving module 201 receives program-related information based on the inputted TS signal (S402).

Moreover, when the channel related to the inputted program-related information is a preferentially stored channel and it is determined that the program-related information can be stored (Yes of S404), the program-related information managing module 202 stores the inputted program-related information into the storage 61 (S408). Then, the program-related information receiving module 201 receives program-related information based on the inputted TS signal (S402).

Now, an example will be described in which the maximum storage amount is arbitrarily determined in the processing of (S404). For example, a case is assumed where the processing is started so as to store information related to the channels of priorities of up to 100 in the storage 61. In this case, when the amount of received information is large and the capacity of the storage 61 for storing this information is insufficient, the number of managed channels is reduced so that information related to the channels of priorities of up to 80 is stored. When the amount of received information becomes smaller and the capacity of the storage 61 for storing information becomes sufficient after the channel number reduction, the number of managed channels is increased so that information related to the channels of priorities of up to 100 is stored. Since the number of managed channels is adaptively reduced or increased as described above, the maximum storage amount is arbitrarily determined.

Moreover, this processing is a processing of repetitively executing the operation of receiving new program-related information and deleting or storing it after deleting or storing the received program-related information. Since program-related information is generally broadcasted while being updated at all times, the operation of repetitively receiving program-related information like the flowchart shown in FIG. 4. is executed.

The processing of storing multiple pieces of program-related information based on the priority of each channel is executed based on such an operation. In other words, this processing is to perform management so that program-related information is stored within the maximum storage amount of storable information by storing the program-related information related to the channel whose set priority is relatively higher while being associated with this priority and deleting the program-related information related to the channel whose set priority is relatively lower. Thus, the television receiver 10 according to the present embodiment can adaptively control the storage of information related to programs broadcasted on multiple channels.

As described above, according to the present embodiment, the priority of each channel set by the user of the television receiver 10 is managed while being associated with channel information. Moreover, the program-related information on each of multiple programs broadcasted on each channel is managed based on the priority of each channel. Thus, according to the embodiment, the television receiver 10 according to the present embodiment can adaptively control the storage of information related to programs broadcasted on multiple channels.

While certain embodiments have been described, these embodiments have been presented by way of example only, and are not intended to limit the scope of the invention. Indeed, the novel apparatus and method described herein may be embodied in a variety of other forms; furthermore, various omissions, substitutions and changes in the form of the apparatus and method described herein may be made without departing from the sprit of the invention. The accompanying claims and their equivalents are intended to cover such forms or modifications as would fall within the scope and sprit of the invention.

## Claims

1. A broadcast receiving apparatus comprising:
a setting module configured to set a priority on at least one of a plurality of channels;
a receiving module configured to receive program-related information related to programs broadcasted on the plurality of channels;
a storage having a maximum storage amount; and
a managing module configured to manage storing the program-related information associated with the priority within the maximum storage amount by storing the program-related information related to a channel of relatively higher priority.

2. The apparatus of claim 1, wherein the managing module is configured to manage storing the program-related information associated with the priority within the maximum storage amount by storing the program-related information related to the channel of relatively higher priority while deleting the program-related information related to a channel of relatively lower priority.

3. The apparatus of claim 2, wherein when the amount of stored program-related information is the maximum storage amount, the managing module is configured to compare the priority set on a channel of the program-related information newly received by the receiving module with the lowest one of the priorities associated with the stored program-related information and to delete the program-related information related to the channel of the lowest priority.

4. The apparatus of one of the preceding claims, wherein the setting module is configured to allow a user to set the priority.

5. The apparatus of one of the preceding claims, wherein the setting module is configured to allow a plurality of channels to be assigned with a same priority.

6. The apparatus of one of the preceding claims further comprising:
a generating module configured to generate a screen of an electronic program guide based on the stored program-related information.

7. The apparatus of one of the preceding claims, wherein when the amount of stored program-related information is not more than the maximum storage amount, the managing module is configured to successively store the program-related information newly received by the receiving module.

8. A broadcast receiving method comprising:
setting a priority on at least one of a plurality of channels;
receiving program-related information related to programs broadcasted on the plurality of channels; and
manage storing the program-related information associated with the priority within a maximum storage amount by storing the program-related information related to a channel of relatively higher priority while deleting the program-related information related to a channel of relatively lower priority.
